Europäisches Patentamt

European Patent Office

Office européen des brevets

(11) Veröffentlichungsnummer: **0 297 452**
**A2**

## EUROPÄISCHE PATENTANMELDUNG

(21) Anmeldenummer: 88110093.7

(51) Int.-Cl.⁴: **B62B 3/10**

(22) Anmeldetag: 24.06.88

(30) Priorität: 01.07.87 DE 8709089 U

(43) Veröffentlichungstag der Anmeldung:
04.01.89 Patentblatt 89/01

(84) Benannte Vertragsstaaten:
AT CH DE FR GB LI NL

(71) Anmelder: **Eberlein, Wolfgang**
**Beethovenstrasse 8**
**D-8871 Bubesheim(DE)**

(72) Erfinder: **Fink, Hermann**
**Kemptner Strasse 2**
**D-8941 Heimertingen(DE)**

(54) Einkaufsrechner.

(57) Ein Einkaufsrechner (1), der zum Aufsetzen auf die Griffstange (15) eines Einkaufswagens geeignet ist, besteht aus einer Befestigungseinheit (4) und aus einer Rechnereinheit(2).

Die Befestigungseinheit (4) weist im wesentlichen zwei zur kraftschlüssigen Anlage an die Griffstange (15) vorgesehene Schenkel (5, 6) auf, die unter dem Einfluß einer von Hand ausgeübten Biegebelastung rachenförmig gegeneinander bewegbar sind. Einer der beiden Schenkel (5 oder 6) trägt die Rechnereinheit (2).

Fig. 1

## EINKAUFSRECHNER

Die Erfindung betrifft einen zum Aufsetzen auf die Griffstange eines Einkaufswagens vorgesehenen Einkaufsrechner, dessen Rechnereinheit mit einer Befestigungseinheit verbunden ist.

Zum Stand der Technik zählt ein Einkaufsrechner, der in der britischen Patentschrift 2 035 225 näher beschrieben ist. Mit Einkaufsrechnern dieser Art wird es Kunden in Supermärkten ermöglicht, die Preissumme der eingekauften Ware selbst auszurechnen.

Bei einem der gezeigten Ausführungsbeispiele gemäß der oben genannten Patentschrift wird vorgeschlagen, am Einkaufsrechner clipartige Arme vorzusehen, die sich aus einer Nichtgebrauchslage, bei der sie an der Unterseite des Einkaufsrechners anliegen, in eine Gebrauchslage herausklappen lassen, so daß sich der Einkaufsrechner in schnappschlüssiger Weise auf die rohrförmige Griffstange eines Einkaufswagens aufsetzen läßt.

Dieser Einkaufsrechner weist einen Nachteil derart auf, daß er in einem auf die Griffstange aufgesetzten Zustand lediglich eine formschlüssige Verbindung mit der Griffstange eingeht. Da diese Verbindung entlang eines Kreisbogens erfolgt, besteht die Gefahr, daß sich der Einkaufsrechner von selbst an der Griffstange verdreht und so die Tastatur und das Anzeigenfeld des Einkaufsrechners aus dem Blickfeld einer den Einkaufswagen schiebenden Person gerät. Nachteilig ist ferner der erforderliche Bauteileaufwand, da immerhin zwei clipartig bewegbare Arme vorgesehen sein müssen, um die Befestigung des Einkaufsrechners an einer Griffstange überhaupt zu ermöglichen. Dabei sollten die clipartigen Arme noch so am Gehäuse der Rechnereinheit befestigt sein, daß sie in Nichtgebrauchslage an der Unterseite des Gehäuses angeschmiegt sind, um den Einkaufsrechner auch bei Nichtgebrauch in einer handlichen Form zu belassen. Sowohl von der konstruktiven Gestaltung, als auch vom Bauteileaufwand her betrachtet, ist diese vorgeschlagene Lösung verbesserungsfähig.

Es sind ferner Rechner bekannt, die einen wäscheklammerartigen Aufbau besitzen, wobei ein Klammerteil die Rechnereinheit trägt und beide Klammerteile durch eine zwischen den Klammerteilen angeordnete Drehfeder in bekannter Weise derart verbunden sind, daß diese Rechner durch Gegeneinanderdrücken der Enden der Klammerteile an plattenförmigen Gegenständen befestig- und wieder davon lösbar sind.

Auch bei dieser Lösung ist der erforderliche Bauteileaufwand relativ groß. Sind doch immerhin zwei getrennte Klammerteile und mindestens eine Drehfeder notwendig, um den Rechner für den vorgesehenen Gebrauchszweck einsetzen zu können. Je größer der Bauteileaufwand jedoch ist, umso höher sind gewöhnlich auch die Herstellkosten.

Die Aufgabe der Erfindung besteht unter Vermeidung der vorab geschilderten Unzulänglichkeiten und Nachteile darin, einen Einkaufsrechner der gattungsgemäßeen Art zu schaffen, der sich im auf eine Griffstange eines Einkaufswagens aufgesetzten Zustand nicht von selbst um die Längsachse der Griff stange verdreht und der zur Erfüllung dieser Aufgabe einen auf ein äußerstes Minimum reduzierten Bauteileaufwand benötigt.

Die Lösung der Aufgabe besteht darin, daß die Befestigungseinheit als ein von Hand verbiegbares, bei Beendigung der Biegebelastung von selbst in seine Ausgangsform zurückkehrendes Teil gestaltet ist, das zwei zur kraftschlüssigen Anlage an die Griffstange bestimmte, unter dem Einfluß der Biegebelastung rachenförmig gegeneinander bewegbare Schenkel aufweist und einer der beiden Schenkel die Rechnereinheit trägt.

Die erfindungsgemäße Lösung besticht durch ihre Einfachheit. Die Befestigungseinheit, welche die Rechnereinheit trägt, ist beim bevorzugten Ausführungsbeispiel nur noch ein einstückiges, aus elastischem Kunststoff gefertigtes flachbandartiges Spritzgußteil, wobei dessen gewählte Form garantiert, daß in aufgesetztem Zustand des Einkaufsrechners auf die Griffstange eines Einkaufswagens zwischen der Griffstange und der Befestigungseinheit nicht nur ein Form-, sondern auch ein Kraftschluß besteht. Dadurch verdreht sich der an einer Griffstange angebrachte Einkaufsrechner nicht von selbst um die Längsachse der Griffstange. In zweckmäßiger Weise ist die Intensität des Kraftschlusses so gewählt, daß ein Verdrehen des Einkaufsrechners auch bei dessen Bedienen ausgeschlossen ist. Die erfindungsgemäße Lösung bedient sich somit eines Bauteileaufwandes, der im Grunde nicht mehr zu reduzieren ist. Derart gestaltete Einkaufsrechner lassen sich daher äußerst kostengünstig herstellen.

Die Erfindung wird anhand von zwei Ausführungsbei spielen näher erläutert. Es zeigt

Fig. 1 einen Einkaufsrechner in räumlicher Ansicht in auf die Griffstange eines Einkaufswagens aufgesetztem Zustand,

Fig. 2 den Einkaufsrechner nach Fig. 1 in Seitenansicht,

Fig. 3 den Einkaufsrechner nach Fig. 1 in Nichtgebrauchslage sowie

Fig. 4 eine weitere Variante.

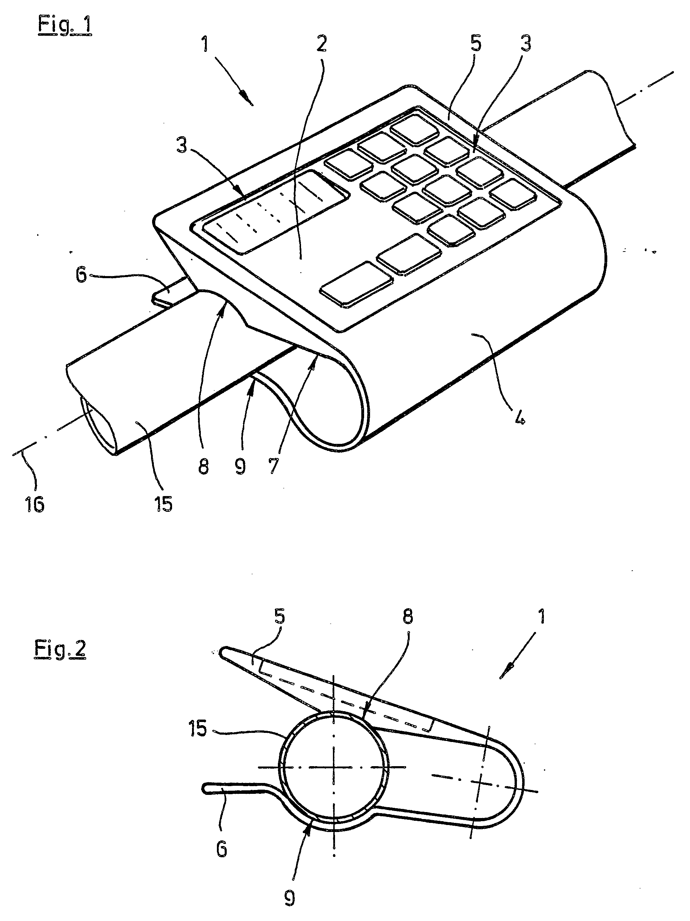

Fig. 1 zeigt den Einkaufsrechner 1 in Gebrauchslage. Teilweise dargestellt ist die rohrförmige Griffstange 15 eines Einkaufswagens, die vom Einkaufsrechner 1 quer zur Längsachse 16 teilweise umgriffen wird. Der Einkaufsrechner 1 besteht aus einer Rechnereinheit 2 und aus einer Befestigungseinheit 4. Die Befestigungseinheit 4 ist annähernd in Form einer Blattfeder gestaltet, die ungefähr U-förmig gebogen ist und einen oberen und einen unteren Schenkel 5, 6 aufweist, wobei der obere Schenkel 5 die Rechnereinheit 2 trägt. Dabei bleibt es dem Hersteller überlassen, ob er beim Fertigungsvorgang die Rechnereinheit 2 ohne zusätzliches Gehäuse direkt in die Befestigungseinheit 4 integriert, derart, daß die Befestigungseinheit 4 das Gehäuse für die Rechnereinheit 2 bildet, oder ob er die mit einem Gehäuse ausgestattete Rechnereinheit 2, also einen Taschenrechner der üblichen Minibauart, in eine an der Befestigungseinheit 4 vorgesehene Vertiefung 3 einsetzt und beispielsweise durch Verkleben der Rechnereinheit 2 mit der Befestigungseinheit 4 zu einem Einkaufsrechner 1 vereint.

Die Befestigungseinheit 4 ist in üblicher Weise aus einem Kunststoff gefertigt, dessen Materialeigenschaften so gewählt sind, daß nach einem Verbiegen der Befestigungseinheit 4 diese wieder von selbst in ihre Ausgangsform zurückkehrt. Als Werkstoff bietet sich Polyamid an. Die Befestigungseinheit 4 ist also als elastisches Teil gestaltet und weist im wesentlichen einen flachbandartigen Querschnitt auf. Die Innenseite 7 des oberen Schenkels 5 besitzt im Beispiel eine kreisbogenförmige, zur Rechnereinheit 2 gerichtete Vertiefung 8, wobei der im Querschnitt betrachtete kreisbogenförmige Umriß einen Winkel von weniger 180° einschließt. Der untere Schenkel 6 weist innenseitig ebenfalls eine kreisbogenförmige, jedoch nach unten gerichtete Vertiefung 9 auf, welche die gleichen konstruktiven Wesensmerkmale wie die obere Vertiefung 8 besitzt. Beide Vertiefungen 8, 9 sind entlang der Längsachse 16 angeordnet und dienen zur Aufnahme der Griffstange 15 eines Einkaufswagens in Längsrichtung. Im Gebrauchszustand ist die Rechnereinheit 1 zu der den Einkaufswagen schiebenden Person gerichtet.

Fig. 2 zeigt den gleichen Einkaufsrechner 1 in Seitenansicht. Man erkennt in der Zeichnung, daß sich der Einkaufsrechner 1 über seine beiden Vertiefungen 8, 9 an der Griffstange 15 abstützt. Durch das Aufweiten des Einkaufsrechners 1 im Bereich seiner Schenkel 5, 6 wird eine Vorspannung erzielt, die den Einkaufsrechner 1 gegen die Griffstange 15 preßt und somit durch den erzielten Reibschluß ein selbsttätiges Verdrehen des Einkaufsrechners 1 um die Griffstange 15 verhindert.

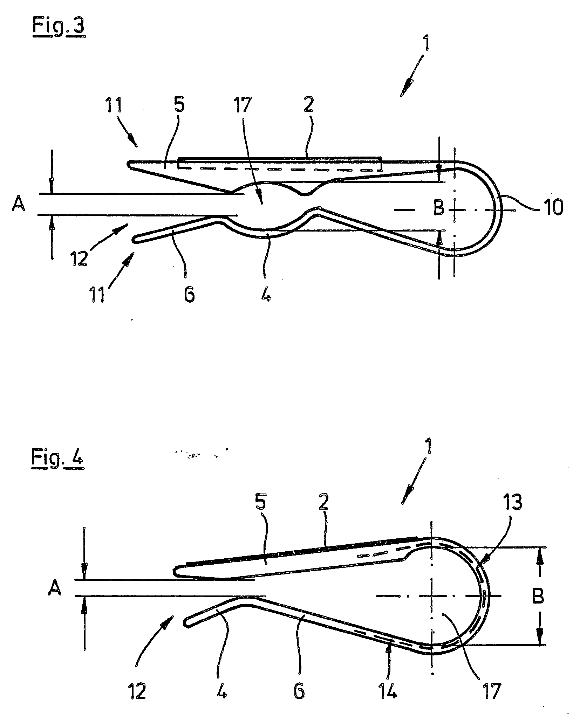

In Fig. 3 ist der in Fig. 1 und 2 beschriebene Einkaufsrechner 1 in Seitenansicht und in Nichtgebrauchslage dargestellt. Die beiden durch einen bogenförmigen Abschnitt 10 miteinander verbundenen Schenkel 5, 6 können, wie in der Zeichnung gezeigt, in etwa parallel zueinander verlaufend angeordnet sein; sie können aber auch schräg zueinander gerichtet sein. Die Enden 11 der Schenkel 5, 6 stre ben jedoch voneinander weg, so daß eine rachenförmige Öffnung 12 geschaffen ist, deren lichte Weite A, gemessen im engsten Bereich, kleiner ist, als die lichte Weite B jenes Abschnittes 17, der zum Umfassen einer Griffstange 15 vorgesehen ist. Durch diese konstruktive Maßnahme ist sichergestellt, daß sich der Einkaufsrechner 1 in einem auf eine Griffstange 15 aufgesetzten Zustand nicht von der Griffstange 15 löst.

Fig. 4 zeigt eine äußerst einfache Form eines Einkaufsrechners 1. Die hier vorgeschlagene Lösung verzichtet auf die in den Figuren 2 und 3 beschriebenen Vertiefungen 8 und 9. Vielmehr verläuft der obere Schenkel gerade, um in einer mehr als 180° einschließenden Krümmung 13 in den unteren Schenkel 6 zu münden, der endseitig vom oberen Schenkel 5 wegstrebt, um die rachenförmige Öffnung 12 zu bilden. Auch bei diesem Beispiel ist die lichte Weite A der rachenförmigen Öffnung 12 kleiner, als die lichte Weite B des Abschnittes 17, der zum Umfassen einer Griffstange 15 vorgesehen ist. Während bei den in den Figuren 1 bis 3 gezeigten Beispielen die Rechnereinheit 2 unmittelbar über der Griffstange 15 zu liegen kommt, so daß beim Eintippen von Zahlen in die Rechnereinheit 2 nur unwesentliche Drehmomente auf den Einkaufsrechner 1 ausgeübt werden, befindet sich bei diesem Ausführungsbeispiel die Rechnereinheit 2 in einem Abstand zur Griffstange 15. Sofern die Eigenspannung der Befestigungseinheit 4 bei diesem Ausführungsbeispiel nicht ausreicht, um beim Bedienen des Einkaufsrechners 1 die auftretenden Drehmomente zu beherrschen, empfiehlt es ich, beim Spritzvorgang wenigstens eine der Krümmungg 13 der Befestigungseinheit 4 nachempfundene metallene Blattfeder 14 einzulegen und zu umspritzen, so daß die Klemmwirkung der Befe festigungseinheit 4 durch die Blattfeder 14 erhöht wird.

Will man den Einkaufsrechner 1 auf eine Griffstange 15 eines Einkaufswagens setzen, genügt es, den Einkaufsrechner 1 mit beiden Händen an der rachenförmigen Öffnung 12 anzufassen und die beiden Schenkel 5, 6 aufzubiegen, so daß sich der Einkaufsrechner 1 mühelos auf die Griffstange 15 aufsetzen läßt. Das Abnehmen des Einkaufsrechners 1 von der Griffstange 15 erfolgt umgekehrt in ähnlicher Weise.

### Ansprüche

1. Zum Aufsetzen auf die Griffstange eines Einkaufswagens vorgesehener **Einkaufsrechner**, dessen Rechnereinheit mit einer Befestigungseinheit verbunden ist, dadurch **gekennzeichnet**, daß die Befestigungseinheit (4) als ein von Hand verbiegbares, bei Beendigung der Biegebelastung von selbst in seine Ausgangsform zurückkehrendes Teil gestaltet ist, das zwei zur kraftschlüssigen Anlage an die Griffstange (15) bestimmte, unter dem Einfluß der Biegebelastung rachenförmig gegeneinander bewegbare Schenkel (5, 6) aufweist und einer der beiden Schenkel (5 oder 6) die Rechnereinheit (2) trägt

2. Einkaufsrechner nach Anspruch 1, dadurch **gekennzeichnet**, daß die Befestigungseinheit (4) in Form einer U-förmig gebogenen Blattfeder gestaltet ist.

3. Einkaufsrechner nach Anspruch 1 oder 2, dadurch **gekennzeichnet**, daß die Befestigungseinheit (4) einen zum teilweisen Umfassen der Griffstange (15) vorgesehenen Abschnitt (17) aufweist, an den sich eine rachenförmige Öffnung (12) anschließt, deren lichte Weite A kleiner ist, als die lichte Weite B des Abschnittes (17).

4. Einkaufsrechner nach einem der Ansprüche 1 bis 3, dadurch **gekennzeichnet**, daß die Schenkel (5, 6) mit Vertiefungen (8, 9) zur Aufnahme der Griffstange (15) ausgestattet sind.

5. Einkaufsrechner nach einem der Ansprüche 1 bis 4, dadurch **gekennzeichnet**, daß die Schenkel (5, 6) durch einen bogenförmigen Abschnitt (10) miteinander verbunden sind.

6. Einkaufsrechner nach einem der Ansprüche 1 bis 5, dadurch **gekennzeichnet**, daß die Vertiefungen (8, 9) kreisbogenförmigen Querschnitt aufweisen und jeder Querschnittsbogen einen Wnkel kleiner 180° einschließt.

7. Einkaufsrechner nach einem der Ansprüche 1 bis 6, dadurch **gekennzeichnet**, daß die Befestigungseinheit (4) im wesentlichen einen flachbandartigen Querschnitt aufweist.

8. Einkaufsrechner nach einem der Ansprüche 1 bis 7, dadurch **gekennzeichnet**, daß die Enden 11 der Schenkel (8, 9) zur Bildung der rachenförmigen Öffnung (12) voneinander weggerichtet sind.

9. Einkaufsrechner nach einem der Ansprüche 1 bis 8, dadurch **gekennzeichnet**, daß wenigstens eine der Krümmung (13) der Befestigungseinheit (4) nachempfundene metallene Blattfeder (14) in die Befestigungseinheit (4) eingesetzt ist.

10. Einkaufsrechner nach einem der Ansprüche 1 bis 9, dadurch **gekennzeichnet**, daß die Rechnereinheit (2) gehäuselos in der Befestigungseinheit (4) integriert ist.

11. Einkaufsrechner nach einem der Ansprüche 1 bis 9, dadurch **gekennzeichnet**, daß die Rechnereinheit (2) als kompletter Taschenrechner in Minibauweise in einer an der Befestigungseinheit (4) vorgesehener Vertiefung (3) unverlierbar einsetzbar ist.

Fig. 1

Fig. 2

Fig. 3

Fig. 4